# EUROPÄISCHE PATENTSCHRIFT

(11) **EP 3 971 427 B1**
(45) Veröffentlichungstag und Bekanntmachung des Hinweises auf die Patenterteilung: **14.05.2025**
(21) Anmeldenummer: 21197527.1
(22) Anmeldetag: 17.09.2021
(51) Int. Cl.: F16B 37/04, F16B 5/06

(54) **VERBINDUNGSSYSTEM ZUM VERBINDEN VON MINDESTENS ZWEI, INSBESONDERE PLATTENARTIGEN ELEMENTEN; ANORDNUNG MIT EINEM DERARTIGEN VERBINDUNGSSYSTEM**
CONNECTION SYSTEM FOR CONNECTING AT LEAST TWO, IN PARTICULAR PLATE-LIKE ELEMENTS, ARRANGEMENT WITH SUCH A CONNECTION SYSTEM
SYSTÈME DE LIAISON PERMETTANT DE RELIER AU MOINS DEUX ÉLÉMENTS, EN PARTICULIER EN FORME DE PLAQUE, AGENCEMENT DOTÉ D'UN TEL SYSTÈME DE LIAISON

(30) Priorität: 18.09.2020 DE 102020124448
(43) Veröffentlichungstag der Anmeldung: 23.03.2022
(73) Patentinhaber: J. Schmalz GmbH, 72293 Glatten (DE)
(72) Erfinder: Müller, Daniel, 72221 Haiterbach (DE); Thielicke, Ernst, 72770 Reutlingen (DE); Beck, Steffen, 72227 Egenhausen (DE); Keck, Dennis, 72160 Horb a.N. (DE); Kunzmann, Kai, 72270 Baiersbronn (DE)
(74) Vertreter: DREISS Patentanwälte PartG mbB

(56) Entgegenhaltungen:
- DE-A1- 19 821 255
- DE-U- 6 948 314
- FR-A1- 2 613 439
- FR-A5- 2 241 213
- US-A- 2 681 679
- US-A- 3 785 421
- US-A1- 2018 266 476

## Beschreibung

Die Erfindung betrifft ein Verbindungssystem zum Verbinden von mindestens zwei, insbesondere plattenartigen, Bauteilen mit den Merkmalen des Oberbegriffs des Anspruchs 1 und eine Anordnung mit Merkmalen des nebengeordneten Anspruchs.

Es sind verschiedene Verbindungs- und Befestigungssysteme bekannt. Dabei kann es erwünscht sein, eine Schraubverbindung umfassend eine Schraube und eine zugehörige Mutter so auszugestalten, dass diese zwei Elemente miteinander verbindet und dazu lediglich von einer Seite aus zugegriffen werden muss. Dies ist vor allem dann wünschenswert, wenn es schwierig ist, Werkzeug an die Mutter anzulegen, weil nicht ausreichend Platz hierzu zur Verfügung steht. Solche Verbindungssysteme kommen z. B. bei der Montage von Metallprofilen aneinander zum Einsatz oder beim Aufbau von Krangerüsten.

So beschreibt z. B. die DE 10 2017 116 858 A1 ein Befestigungselement für eine Befestigung an einer Montageschiene mit einer Hammerkopfschraube, die in einem U-förmigen Clip untergebracht ist, so dass die Hammerkopfschraube um eine Achse geschwenkt werden kann.

DE 10 2017 116 856 A1 schlägt eine rechteckige rohrförmige Montageschiene mit einem Hammerkopfbolzen als Befestigungselement vor. Dabei sind die Montageschienen mit Vertiefungen ausgebildet, die sich in Längsrichtung erstrecken und in denen ein scheibenförmiges Widerlager des Befestigungselements versenkbar ist, das auf einem Schaft einer Schraube des Befestigungselements angeordnet ist.

US 2 681 679 A, US 3 785 421 A, DE 69 48 314 U, FR 2 241 213 A5 und US 2018 / 266 476 A1 zeigen jeweils ein Verbindungssystem mit Merkmalen des Anspruchs 1.

Die Aufgabe der Erfindung ist es, ein Verbindungssystem zum Verbinden zweier insbesondere plattenartiger Elemente bzw. Bauteile bereitzustellen, welches von einer Seite aus komfortabel befestigbar ist.

Diese Aufgabe wird durch ein Verbindungssystem mit den Merkmalen des Anspruchs 1 gelöst. Das Verbindungssystem umfasste eine Schraube und eine mit der Schraube korrespondierende Mutter. Die Mutter weist einen Schraubkanal auf, der sich entlang einer Schraubachse erstreckt. In diesen Schraubkanal lässt sich die Schraube einschrauben. Der Schraubkanal weist vorzugsweise zumindest Abschnittsweise ein Innengewinde auf. Dadurch kann z.B. eine gewöhnliche Schraube eingedreht werden.

Das Verbindungssystem umfasst weiter einen Käfig zur Aufnahme der Mutter. Dieser Käfig dient dazu, die Mutter beim Einschrauben der Schraube zu halten, insbesondere ohne dass die Mutter mit einem Schraubschlüssel gegengehalten werden muss.

Die Mutter weist eine spezielle Formgebung auf, mit einem Fußabschnitt und einen sich entlang der Schraubachse anschließenden Kopfabschnitt. Dabei steht der Fußabschnitt zumindest abschnittsweise in Richtung senkrecht zur Schraubachse über den Kopfabschnitt über. Mit anderen Worten weist der Fußabschnitt entlang der Schraubachse betrachtet eine größere Querschnittsfläche auf, als der Kopfabschnitt. Die Mutter kann insofern als eine Hammerkopfmutter ausgestaltet sein, wobei der Fußabschnitt den Kopfabschnitt hammerartig überragt.

Die genannte Ausgestaltung ermöglicht es, dass der Kopfabschnitt der Mutter durch die aneinander zu befestigenden Elemente bzw. Bauteile durchgeführt wird und der Fußabschnitt an einem der Elemente bzw. Bauteile anliegt. Durch Eindrehen der Schraube werden dann die zu befestigenden Elemente/Bauteile aneinander gepresst, wobei lateral wirkende Kräfte von dem Kopfabschnitt der Mutter aufgenommen werden. Da die Mutter beim Eindrehen der Schraube in dem Käfig aufgenommen ist, kann eine einfache Handhabung von einer Seite aus erfolgen, insbesondere ohne Gegenfixierung der Mutter mit einem Schraubschlüssel.

Vorzugsweise gehen der Fußabschnitt und der Kopfabschnitt der Mutter stufenförmig ineinander über. Insbesondere bilden der Fußabschnitt und der Kopfabschnitt zusammen eine Stufe aus. Insofern kann zwischen Fußabschnitt und Kopfabschnitt eine Innenkante verlaufen, in welcher eine Mantelfläche des Kopfabschnitts im Wesentlichen rechtwinklig auf eine Oberfläche des Fußabschnitts stößt.

Vorzugsweise verläuft der Schraubkanal durch den Kopfabschnitt und durch den Fußabschnitt. Der Schraubkanal kann insbesondere als Durchgangsöffnung durch Kopfabschnitt und Fußabschnitt ausgebildet sein. Mit anderen Worten, der Schaubkanal verläuft insbesondere zumindest durch den Kopfabschnitt der Mutter, so dass die Schraube in die Mutter und insbesondere in den Kopfabschnitt der Mutter eingedreht werden kann. Eine Durchgangsöffnung erlaubt die Verwendung von Schrauben mit unterschiedlichen Längen.

Vorteilhaft kann sein, dass der Kopfabschnitt und/oder der Fußabschnitt eine Oberseite aufweist, welche sich insbesondere im Wesentlichen senkrecht zur Schraubachse erstreckt, wobei die Oberseite eben, insbesondere glatt, ausgebildet ist. Mit glatt ist im Sinne der vorliegenden Anmeldung gemeint, dass die Oberseite insbesondere keine Riffelungen aufweist. Diese konstruktive Maßnahme kann bei dem beschriebenen Verbindungssystem eingespart werden, da lateral zur Schraubachse wirkende Kräfte weitgehend von der Mutter (insbesondere Kopfabschnitt) aufgenommen werden.

Insbesondere ist die Oberseite des Kopfabschnitts und oder des Fußabschnitts senkrecht zur Schraubachse angeordnet.

Erfindungsgemäß ist die Oberseite des Fußabschnitts dazu ausgebildet, an eine Oberfläche der zu verbindenden Elemente anzuliegen und diese aneinander zu pressen.

Der Käfig weist einen Bodenabschnitt sowie einen an den Bodenabschnitt angrenzenden Mantelabschnitt auf. Der Käfig begrenzt einen Aufnahmeraum für die Mutter. Der Mantelabschnitt weist wenigstens einen Durchbruch auf, durch welchen die Mutter zumindest teilweise in den Aufnahmeraum einschiebbar ist. Der Bodenabschnitt des Käfigs kann eben ausgestaltet sein, Erhebungen und/oder Vertiefungen aufweisen und/oder z. b. geriffelt ausgestaltet sein, um ein Herausrutschen der Mutter zu verhindern.

Der Käfig weist einen Deckelabschnitt auf, wobei der Deckelabschnitt an den Mantelabschnitt angrenzt und beabstandet zum Bodenabschnitt angeordnet ist. Auch hier ist es analog zum Bodenabschnitt denkbar, dass der Deckelabschnitt des Käfigs eben ausgestaltet sein kann, Erhebungen und/oder Vertiefungen aufweisen kann und/oder z. b. geriffelt ausgestaltet sein kann, um ein Herausrutschen der Mutter zu verhindern. Durch den Deckelabschnitt wird die Mutter weitgehend in dem Käfig stabilisiert, sodass die Schraube komfortabel eingedreht werden kann.

Es ist eine Schrauböffnung zum Durchführen der Schraube in dem Bodenabschnitt und/oder dem Deckelabschnitt vorgesehen. Dabei kann die Schrauböffnung des Bodenabschnitts und die Schrauböffnung des Deckelabschnitts die gleiche Form und/oder Größe aufweisen. Es ist ebenso denkbar, dass die Schrauböffnung des Bodenabschnitts und die Schrauböffnung des Deckelabschnitts unterschiedliche Form und/oder Größe aufweisen, da die Schrauböffnung nicht zwingend eine Führungsfunktion für die Schraube bereitstellen muss.

Der Käfig und die Mutter sind derart ausgebildet, dass die Mutter in Richtung senkrecht zur Schraubachse durch den Durchbruch des Mantelabschnitts in den Aufnahmeraum derart einschiebbar ist, dass der Schraubkanal mit der Schrauböffnung des Bodenabschnitts und/oder der Schrauböffnung des Deckelabschnitts fluchtet. Zum Verbinden kann dann die Schraube durch die Schrauböffnung des Deckelabschnitts in den Schraubkanal der Mutter eingedreht werden. Dabei wird die Schraube bzw. die Mutter weitgehend fixiert, so dass ein unbeabsichtigtes Herausfallen aus dem Käfig verhindert werden kann.

Bevorzugterweise ist, wenn die Mutter in den Aufnahmeraum eingeschoben ist, der Kopfabschnitt vollständig in dem Aufnahmeraum aufgenommen. Dabei kann der Fußabschnitt den Aufnahmeraum durch den Durchbruch des Mantelabschnitts hindurch zumindest teilweise überragen.

Vorteilhaft kann sein, dass der Mantelabschnitt des Käfigs mindestens eine dem Aufnahmeraum zugewandte Innenfläche, insbesondere zwei gegenüberliegende Innenflächen, aufweist. Die Innenfläche kann eine Anlagefläche für eine Seitenfläche des Fußabschnitts und/oder eine Seitenfläche des Kopfabschnitts derart bereitstellen, dass dann, wenn die Mutter in den Aufnahmeraum eingeschoben ist, die Mutter gegen ein Verdrehen um die Schraubachse fixiert ist. Insbesondere kann die Anlagefläche eben ausgestaltet sein, Erhebungen und/oder Vertiefungen aufweisen und/oder z. b. geriffelt ausgestaltet sein, um ein Herausrutschen der Mutter zu verhindern.

Die Mutter weist insbesondere zwei gegenüberliegende, ebene Flächen auf. Insbesondere liegen die Seitenfläche des Kopfabschnitts und die Seitenfläche des Fußabschnitts in einer Ebene. Die Mutter ist insofern weiter vorzugsweise an zwei gegenüberliegenden Seiten eben ausgestaltet (je eine der ebenen Flächen umfasst dann eine der genannten Seitenflächen des Fußabschnitts und die daran anschließende Seitenfläche des Kopfabschnitts).

Der Fußabschnitt der Mutter steht insbesondere an zwei gegenüberliegenden Enden über den Kopfabschnitt über, verläuft aber zwischen den beiden überstehenden Bereichen bündig mit dem Kopfabschnitt (derart, dass die ebene Fläche an der Seite der Mutter ausgebildet ist). Allgemein gesprochen sind Kopfabschnitt und Fußabschnitt in Projektion der Schraubachse betrachtet vorzugsweise gleich breit, aber der Fußabschnitt ist länger, als der Kopfabschnitt und überragt den Kopfabschnitt daher.

Vorzugsweise weist der Käfig eine zylindrische, insbesondere eine kreiszylindrische Außenform auf. Dadurch kann der Käfig in einen Durchbruch in den zu verbindenden Elementen eigeschoben werden bzw. durchgesteckt werden.

Der Bodenabschnitt und/oder der Deckelabschnitt können sich z.B. eben erstrecken und einen runden, insbesondere kreisförmigen, Außenumfang aufweisen.

Zur weiteren Ausgestaltung ist denkbar, dass in Projektion entlang der Schraubachse betrachtet, der Bodenabschnitt größer ist, als der Deckelabschnitt. Insbesondere in Projektion entlang der Schraubachse betrachtet kann der Bodenabschnitt den Deckelabschnitt im Bereich des Durchbruchs überragen. Mit anderen Worten: In der Draufsicht auf das Verbindungssystem kann der Deckelabschnitt und teilweise der Bodenabschnitt des Verbindungssystems sichtbar sein. In der Ansicht von unten auf das Verbindungssystem kann nur der Bodenabschnitt sichtbar sein. Dies ermöglicht es, den Käfig mit seinem Bodenabschnitt durch entsprechende Löcher bzw. Langlöcher in den zu verbindenden Bauteilen zu stecken, wobei dann aufgrund des geringeren Durchmessers des Deckelabschnitts der Käfig trotzdem noch verdreht und/oder in einem Langloch verschoben werden kann.

Vorzugsweise sind an dem Käfig mindestens zwei Vorsprünge vorgesehen, z.B. in der Art von überstehenden Flügeln bzw. Laschen. Die Vorsprünge sind insbesondere an dem Mantelabschnitt des Käfigs und/oder dem Deckelabschnitt des Käfigs angeordnet und erstrecken sich im zusammengeschraubten Zustand insbesondere von der Schraubachse weg und sind insbesondere rotationssymmetrisch und/oder einander gegenüberliegend bezüglich der Schraubachse angeordnet. Vorzugsweise sind genau zwei Vorsprünge vorgesehen, die auf gegenüberliegenden Seiten des Käfigs angeordnet sind. Damit lassen sich die Vorsprünge und damit der Käfig mit einem Griff mit zwei Fingern handhaben. Weiter bevorzugt können drei Vorsprünge an dem Käfig angeordnet sein, so dass mit einem Griff mit drei Fingern der Käfig handhabbar ist. Der Griff mit drei Fingern ist besonders stabil und angenehm für die Handhabung. Insbesondere kann der Abstand zwischen den Vorsprüngen gleich sein.

Vorzugsweise ist an dem Bodenabschnitt mindestens ein federndes Element vorgesehen. Dabei kann das federnde Element die Mutter, insbesondere den Fußabschnitt, im zusammengesetzten Zustand des Verbindungssystems vom Bodenabschnitt wegdrücken. Mit anderen Worten, das federnde Element drückt die Mutter vom Bodenabschnitt weg in Richtung der Schraube bzw. in Richtung eines gegebenenfalls vorhandenen Deckelabschnitts. Damit wird die Mutter im zusammengesetzten Zustand gegen den Schraubenkopf, insbesondere entlang der Schraubachse, vorgespannt. Das federnde Element kann in den Aufnahmeraum des Käfigs hineinragen, oder derart ausgestaltet sein, dass es vom Aufnahmeraum bzw. Mantelabschnitt wegragt.

Das federnde Element kann sich vom Bodenabschnitt und/oder Mantelabschnitt flügelartig nach radial außen, also radial von der Schraubachse weg, erstrecken. Es ist aber ebenso denkbar, dass das federnde Element sich nach radial innen, also radial zu der Schraubachse hin, erstreckt.

Besonders vorteilhaft sind zwei federnde Elemente vorgesehen, die insbesondere auf sich gegenüberliegenden Seiten des Bodenabschnitts angeordnet sind.

Die zu lösende Aufgabe wird weiter durch die erfindungsgemäße Anordnung mit den Merkmalen des nebengeordneten Anspruchs gelöst. Die Anordnung stellt insofern einen Bausatz dar und umfasst ein Verbindungssystem mit oben beschriebenen Merkmalen, ein erstes insbesondere plattenartiges Element bzw. Bauteil und ein zweites insbesondere plattenartiges Element bzw. Bauteil, wobei das erste Element und das zweite Element jeweils mindestens ein Loch aufweisen.

Dabei weist das Loch eine der Mutter und/oder dem Bodenabschnitt des Käfigs entsprechende Form auf, so dass der Käfig mit aufgenommener Mutter in das Loch einführbar ist.

Zur weiteren Ausgestaltung weist das erste Element und/oder das zweite Element ein erstes Langloch mit zwei Längsseiten auf. Der Abstand zwischen den Längsseiten kann dem Bodenabschnitt des Käfigs entsprechen, so dass der Käfig mit aufgenommener Mutter in das Langloch einführbar und das Verbindungssystem entlang des Langlochs bewegbar ist. Dabei ist das Bewegen des Verbindungssystems entlang des ersten Langlochs unabhängig von einem Verdrehen des Verbindungssystems um die Schraubachse möglich.

Vorteilhafterweise weist das erste Element und/oder das zweite Element ein zweites Langloch mit zwei Längsseiten auf, wobei das zweite Langloch an mindestens einer Stelle eine dem Bodenabschnitt des Käfigs entsprechende Form aufweist. An dieser Stelle kann der Abstand zwischen den beiden Längsseiten größer sein, als an einer anderen Stelle des zweiten Langlochs, so dass das Bewegen des Verbindungssystems entlang des Langlochs, insbesondere durch eine Drehung des Käfigs um 90° um die Schraubachse, blockierbar ist. Das Verbindungssystem kann nur an diesen Stellen in das zweite Langloch eingeführt und wieder herausgezogen werden.

Vorteilhafterweise ist das Verbindungssystem und die beiden Elemente derart ausgebildet, dass das erste und das zweite Element zwischen Mutter und Käfig positioniert werden können, so dass der Käfig in Verbindung mit der Mutter die beiden Elemente umschließt. Die beiden Elemente können so durch Käfig und Mutter, beispielsweise als Montagehilfe, zusammengehalten bzw. zusammengedrückt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht auf ein Verbindungssystem in einem auseinander genommenen Zustand;
- Fig. 2: eine perspektivische Ansicht auf das Verbindungssystem gemäß Figur 1 in einem zusammengesetzten Zustand;
- Fig. 3: eine Ansicht auf einen Schnitt durch das Verbindungssystem gemäß Figur 1 in einem zwei Elemente verbindenden Zustand;
- Fig. 4: eine Ansicht auf einen senkrecht zum Schnitt in Figur 3 angeordneten Schnitt durch das Verbindungssystem gemäß Figur 1 in einem zwei Elemente verbindenden Zustand;
- Fig. 5: eine perspektivische Ansicht auf eine erfindungsgemäße Anordnung;
- Fig. 6: ein weiteres Ausführungsbeispiel eines Verbindungssystems;
- Fig. 7: eine Ansicht auf einen Schnitt durch das Verbindungssystem gemäß Figur 6 und
- Fig. 8: eine Ansicht auf einen Schnitt durch ein weiteres Ausführungsbeispiel des Verbindungssystems.

In der nachfolgenden Beschreibung sowie in den Figuren tragen sich entsprechende Bauteile und Elemente gleiche Bezugszeichen. Zur besseren Übersichtlichkeit sind nicht in allen Figuren sämtliche Bezugszeichen wiedergegeben.

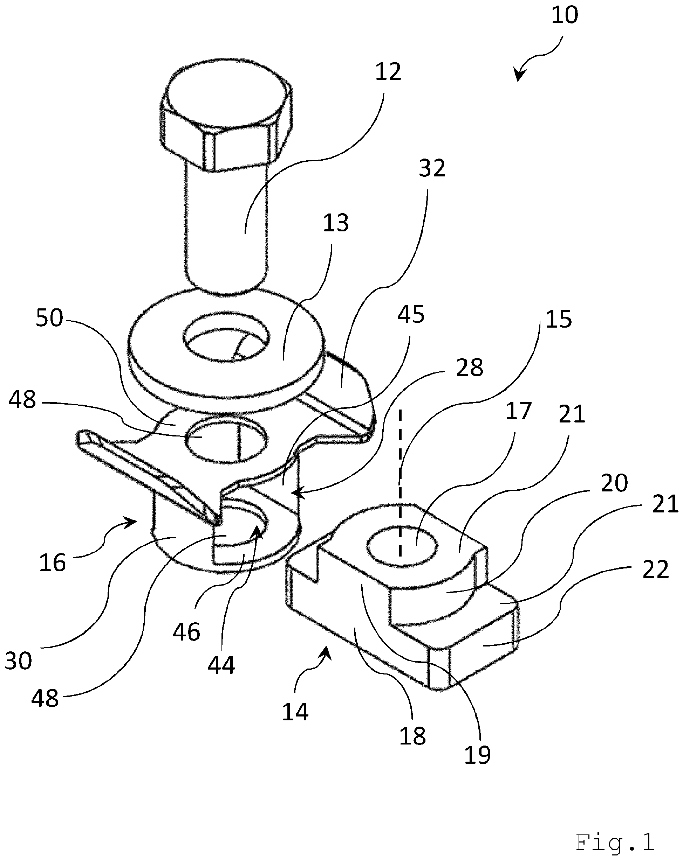

Figur 1 zeigt eine perspektivische Ansicht auf ein erfindungsgemäßes Verbindungssystem 10 in einem auseinander genommenen Zustand. Das Verbindungssystem 10 umfasst eine Schraube 12 und eine Mutter 14. Die Schraube 12 ist nur schematisch und ohne ein Außengewinde dargestellt. Die Mutter 14 weist, einen Schraubkanal 17 auf, der vorliegend als Durchgangsöffnung ausgebildet ist und der sich entlang einer Schraubachse 15 erstreckt. Die Schraubachse 15 ist in Fig. 1 durch eine gestrichelte Linie dargestellt. Der Schraubkanal 17 weist ein nicht dargestelltes Innengewinde auf, welches mit dem ebenfalls nicht dargestellten Außengewinde der Schraube 12 korrespondiert, sodass die Schraube 12 in den Schraubkanal 17 der Mutter 14 einschraubbar ist.

Die Mutter 14 weist einen Fußabschnitt 22 und einen entlang der Schraubachse 15 an den Fußabschnitt 22 angrenzenden Kopfabschnitt 20 auf. Die Mutter 14 ist vorliegend einstückig ausgestaltet. Es ist jedoch denkbar die Mutter 14 aus mehreren Elementen bestehend auszugestalten. So kann beispielsweise der Kopfabschnitt 20 der Mutter 14 einstückig und den Fußabschnitt 22 der Mutter 14 einstückig ausgestaltet sein.

Der Fußabschnitt 22 geht vorliegend stufenförmig in den Kopfabschnitt 20 über. Der Flussabschnitt 22 überragt den Kopfabschnitt an zwei sich gegenüberliegenden Seiten des Kopf- bzw. Fußabschnittes 20, 22, so dass auf diesen sich gegenüberliegenden Seiten jeweils eine Stufenform gebildet wird.

Der Kopfabschnitt 20 weist eine Seitenfläche 19 auf und der Fußabschnitt 22 weist eine Seitenfläche 18 auf. Vorliegend sind diese beiden Flächen als eine gemeinsame ebene Seitenfläche ausgebildet.

Der Kopfabschnitt 20 weist eine senkrecht zur Schraubachse 15 angeordnete Oberseite 21 auf, die vorliegend eben ausgebildet ist. Auch der Fußabschnitt 22 weist eine senkrecht zur Schraubachse 15 angeordnete Oberfläche 21 auf, d. h. parallel zur Oberseite 21 des Kopfabschnittes 20. Die Oberseite 21 des Fußabschnittes ist ebenfalls eben ausgebildet. Insbesondere weisen die Oberseiten 21 keine Riffelungen auf, da lateral (entlang der Oberflächen der zu befestigenden Elemente wirkende) Kräfte durch den Kopfabschnitt 20 aufgenommen werden.

Der Kopfabschnitt 20 weist an zwei sich gegenüberliegenden Seiten, an denen der Fußabschnitt 22 und der Kopfabschnitt 20 eine Stufenform bilden, eine im Wesentlichen runde Außenform auf.

Der Fußabschnitt 22 und der Kopfabschnitt 20 weisen in Projektion entlang der Schraubachse 15 betrachtet jeweils eine Breite und eine Länge auf. Vorzugsweise ist die Breite des Fußabschnitts 22 im Wesentlichen gleich der Breite des Kopfabschnitts, so dass die Mutter 14 eine insgesamt im Wesentlichen ebene Seitenfläche aufweist. Der Fußabschnitt 22 ist aber vorzugsweise länger, als der Kopfabschnitt 20, so dass der Fußabschnitt 22 zumindest abschnittsweise in Richtung senkrecht zur Schraubachse 15 über den Kopfabschnitt 20 übersteht. Zur weiteren Ausgestaltung können Länge und Breite des Kopfabschnitts 20 im Wesentlichen gleich groß sein. Bei dem Fußabschnitt 22 ist jedoch vorzugsweise die Länge größer, als die Breite. Insbesondere ist der Fußabschnitt 22 in Projektion entlang der Schraubachse 15 betrachtet im Wesentlichen rechteckig.

Das Verbindungssystem 10 weist weiter einen Käfig 16 auf. Der Käfig 16 hat vorliegend einen Bodenabschnitt 46, einen sich daran angrenzenden Mantelabschnitt 30 und einen sich an den Mantelabschnitt 30 angrenzenden Deckelabschnitt 50. Der Bodenabschnitt 46 ist flach bzw. plattenförmig ausgebildet, weist eine Schrauböffnung 48 und eine kreisförmige Außenform auf. Auch der Deckelabschnitt 50 ist flach bzw. plattenförmig ausgebildet und weist eine Schrauböffnung 48 auf, die vorliegend die gleiche Größe und Form wie die Schrauböffnung 48 des Bodenabschnitt 46 aufweist. Der Deckelabschnitt 50 weist im Wesentlichen eine runde Außenform auf.

An dem Deckelabschnitt 50 sind an zwei sich gegenüberliegenden Seiten Vorsprünge 32 angeordnet. Vorliegend sind die Vorsprünge 32 kragenartig bzw. flügelartig ausgebildet und erstrecken sich vom Deckelabschnitt 50 nach radial außen.

Der Käfig 16 bildet einen Aufnahmeraum 44 für die Mutter 14. vorliegend wird der Aufnahmeraum 44 den Bodenabschnitt 46, den Mantelabschnitt 30 und den Deckelabschnitt 50 begrenzt.

Der Mantelabschnitt 30 weist zwei Durchbrüche 28 auf, die auf gegenüberliegenden Seiten des Mantelabschnitts 30 angeordnet sind. Durch diese Durchbrüche 28 kann die Mutter 14 in den Käfig 16 und somit in den für die Mutter 14 bestimmten Aufnahmeraum 44 eingeschoben werden.

Vorliegend sind zwei gegenüberliegende Seiten des Mantelabschnitts 30 an deren Innenfläche 45, d. h. dem Aufnahmeraum 44 zugewandten Flächen, eben ausgebildet. Diese Innflächen 45 sind derart ausgebildet, dass die Mutter 14, wenn sie in den Käfig 16 eingeschoben wird, mit den Seitenflächen 18 und 19 an den Innenflächen 45 aufliegt. Damit ist die Mutter 14 gegenüber einem Verdrehen um die Schraubachse 15 in Bezug auf den Käfig 16 fixiert. Somit kann der Käfig 16 samt der aufgenommenen Mutter 14 über die zwei Vorsprünge 32 sicher gedreht und gehandhabt werden.

Im dargestellten Beispiel ist eine Unterlegscheibe 13 dargestellt. Zum zusammensetzten des Verbindungssystems 10 wird die Mutter 14 durch einen der zwei Durchbrüche 28 in den Aufnahmeraum 44 eingeschoben, sodass die Schrauböffnungen 48 des Bodenabschnitts 46 und des Deckelabschnitts 50 fluchtend mit dem Schraubkanal 17 zusammenliegen. Sobald die Mutter 14 im Käfig 16 bzw. dessen Aufnahmeraum 44 aufgenommen ist, kann das Verbindungssystem an den Fortsätzen 32 gehandhabt werden. Danach wird die Schraube 12 ggf. zunächst durch die Unterlegscheibe 13, dann durch die Schrauböffnung 48 des Deckelabschnitts 50, durch den Schraubkanal 17 der Mutter 14, und anschließend durch die Schrauböffnung 48 des Bodenabschnitt 46 hindurchgesteckt bzw. geschraubt.

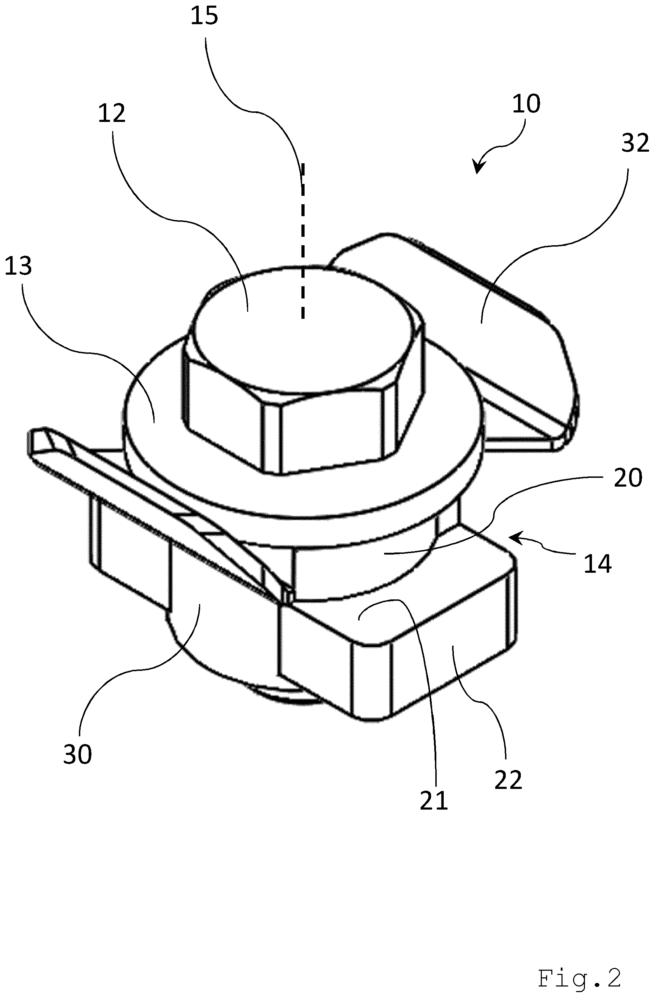

Figur 2 zeigt eine perspektivische Ansicht auf das Verbindungssystem 10 gemäß Figur 1 in einem zusammengesetzten Zustand. In diesem Zustand ist die Mutter 14 im Käfig 16 bzw. dem Aufnahmeraum 44 aufgenommen. Der Fußabschnitt 22 ragt an zwei sich gegenüberliegenden Seiten aus dem Aufnahmeraum 44 bzw. aus dem Käfig 16 durch dich Durchbrüche 28 heraus. Der Kopfabschnitt 20 der Mutter 14 ist im Wesentlichen innerhalb des Aufnahmeraum 44 angeordnet. Im dargestellten Beispiel sind die beiden Vorsprünge 32 entlang der Schraubachse 15 betrachtet senkrecht zu den Durchgangsrichtungen der Durchbrüche 28 angeordnet.

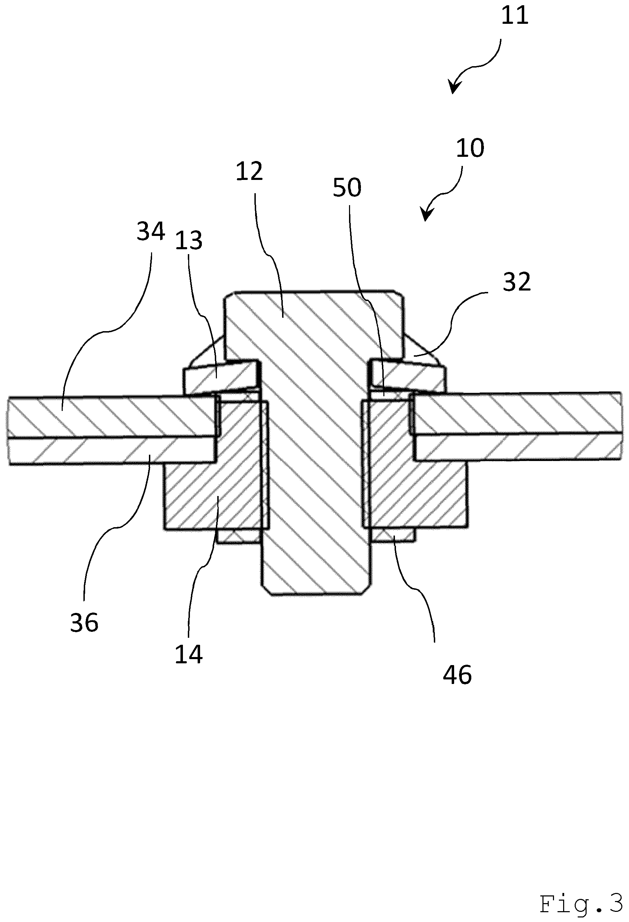

Figur 3 zeigt eine Ansicht auf einen Schnitt durch das Verbindungssystem 10 gemäß Figur 1 in einem zwei Elemente 34,36 verbindenden Zustand. Zum verbindenden zweier Elemente 34,36 wird zunächst die Mutter 14 in den Aufnahmeraum 44 des Käfig 16 eingeschoben. Der Käfig 16 lässt sich mit der darin aufgenommenen Mutter 14 mittels der beiden Vorsprünge 32 von einer Seite eines zu verbindenden Elements 34,36 handhaben. Mit anderen Worten kann der Käfig 16 mit der darin aufgenommenen Mutter 14 von derselben Seite eines zu verbindenden Elements 34,36 festgehalten und die Schraube 12 in die Mutter 14 eingeschraubt werden.

Die als Platten ausgebildeten Elemente 34,36 werden mittels des Verbindungssystems 10 miteinander verbunden. Durch Drehung der Schraube 12 wird diese in das Innengewinde des in der Mutter 14 angeordneten Schraubkanals 17 eingeschraubt. Dadurch bewegt sich die Mutter 14 in Richtung des Schraubenkopfes (also in Fig. 3 nach oben). Dabei drückt die Oberseite 21 des aus dem Aufnahmeraum 44 herausragenden Fußabschnitts 22 gegen das zweite Element 36 und drückt dieses gegen das erste Element 34. Das erste Element 34 wird wiederum durch die Unterlegscheibe 13 in die entgegengesetzte Richtung (also in Fig. 3 nach unten) gedrückt. Somit werden die beiden Elemente 34,36 zwischen dem Fußabschnitt 22 der Mutter 14 und der Unterlegscheibe 13 eingeklemmt. Selbstverständlich ist hierbei jeweils die Relativbewegung gemeint.

Mögliche Scherkräfte zwischen den beiden Elementen 34 und 36 werden durch den Kopfabschnitt 20 der Mutter 14 aufgefangen. Dies entlastet die Schraube bzw. verhindert eine Übertragung der Scherkräfte zwischen den beiden Elementen 34 und 36 auf die Schraube 12, die sonst die schwächste Stelle einer Schraubverbindung darstellen kann.

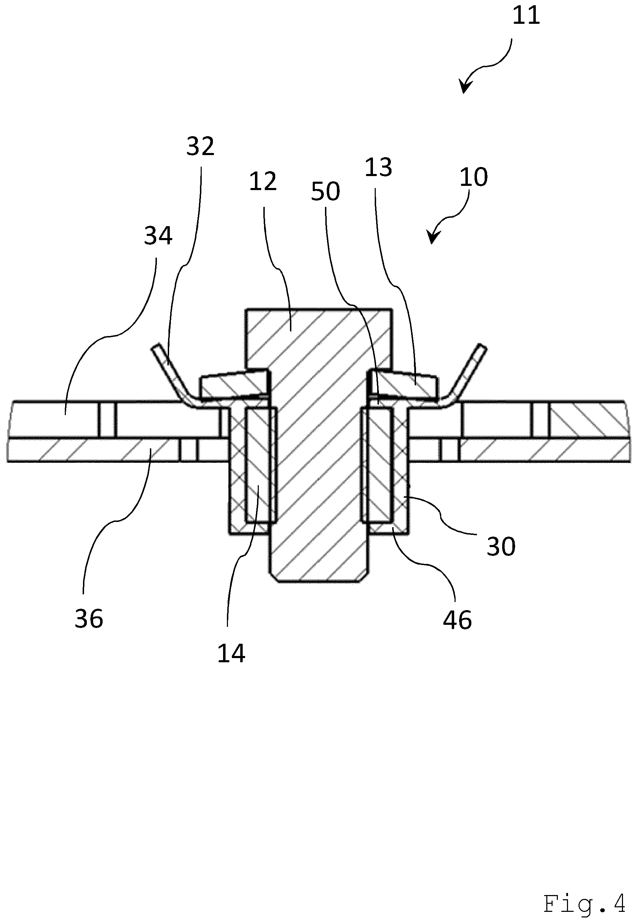

Figur 4 zeigt eine Ansicht auf einen senkrecht zum Schnitt in Figur 3 angeordneten Schnitt durch das Verbindungssystem 10 gemäß Figur 1 in einem zwei Elemente 34,36 verbindenden Zustand. In der dargestellten Orientierung werden die Scherkräfte zusätzlich zum Kopfabschnitt 20 auch zumindest teilweise vom Mantelabschnitt 30 aufgefangen. Was zu einer weiteren Entlastung der Schraube 12 führt.

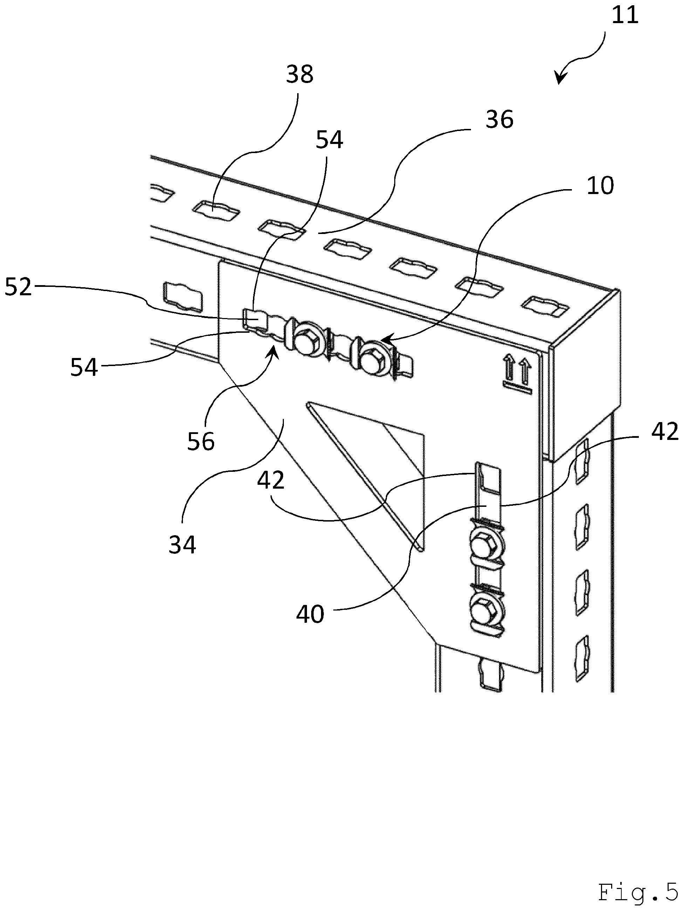

Figur 5 zeigt eine perspektivische Ansicht auf eine erfindungsgemäße Anordnung 11. Dargestellt ist ein erstes Element 34, dass in Form eines im Wesentlichen dreieckigen Winkelelements ausgestaltet ist und ein zweites Element 36, dass in Form eines eckigen Profils ausgestaltet ist.

Das zweite Element 36 weist vorliegend mehrere Löcher 38 auf. Die Löcher 38 weisen eine Form auf, die der Form des Bodenabschnitt 46 und der Mutter 14 entspricht, wenn die Mutter 14 in dem Käfig 16 bzw. dem Aufnahmeraum 44 aufgenommen ist. So kann das Verbindungssystem 10 durch ein solches Loch 38 durchgesteckt werden. In einer Orientierung kann das Verbindungssystem durch ein derartiges Loch 38 hindurchgesteckt werden, wobei ein Durchstecken in einer um 90° gedrehten Orientierung vorzugsweise aufgrund der Form des Lochs 38 blockiert ist. Dreht man das Verbindungssystem 10, nachdem es durch das Loch 38 hindurchgesteckt wurde um beispielsweise 90° um die Schraubachse 15, so verhindern die aus dem Käfig 16 bzw. dem Aufnahmeraum 44 herausragenden Abschnitte des Fußabschnitts 22 der Mutter 14 das Herausziehen des Verbindungssystems 10 aus dem Loch 38. In diesem verdrehten Zustand kann das Verbindungssystem 10 zwei Elemente miteinander verbinden (vgl. Figur 4).

Das erste Element 34 weist ein erstes Langloch 40 auf. Das erste Langloch 40 hat zwei Längsseiten 42. Dabei entspricht der Abstand zwischen den beiden Längsseiten 42 des ersten Langlochs 40 dem Durchmesser und somit der breitesten Stelle des Bodenabschnitts 46 des Käfigs 16. Damit kann das Verbindungssystem 10 entlang des ersten Langloch 40 verschoben werden. Wenn das Verbindungssystem 10 durch das erste Langloch 40 hindurchgesteckt ist, so kann das Verbindungssystem 10 auch nach einer Drehung um die Schraubachse 15 entlang des Langloch 40 verschoben werden, da der Abstand zwischen den beiden Seiten 42 entsprechend groß ist.

Des Weiteren weist das erste Element 34 ein zweites Langloch 52 auf. Das zweite Langloch weist zwei Längsseiten 54 auf, wobei entlang des zweiten Langloch 52 vorliegend mehrere Stellen 56 angeordnet sind, an denen der Abstand zwischen den Längsseiten 54 dem Durchmesser und somit der breitesten Stelle des Bodenabschnitts 46 des Käfigs 16 entsprechen. Der Abstand zwischen den Längsseiten 54 ist an diesen Stellen am größten. Insofern ist an anderen Stellen des zweiten Langlochs 52 der Abstand zwischen den Längsseiten 54 geringer. Nur an den Stellen 56 (insbesondere die mit großem Abstand zwischen den Längsseiten 54) kann das Verbindungssystem 10 in das zweite Langloch 52 hineingesteckt und wieder herausgezogen werden. Der minimale Abstand zwischen den Längsseiten 54 entspricht insbesondere der Breite des Kopfabschnitts 20 der Mutter 14 und ggf. des umgebenden Käfigs.

Somit kann das Verbindungssystem 10 mit der im Käfig 16 aufgenommenen Mutter 14 durch das zweite Langloch 52 durchgesteckt werden kann. Nach dem Durchstecken des Verbindungssystems 10 durch das zweite Langloch 54 an einer der Stellen 56 ist das Verbindungssystem 10 gegen ein Verschieben entlang des zweiten Langlochs 52 blockiert. Der Mantelabschnitt 30 weist an seiner Außenform eine dem Bodenabschnitt 46 entsprechende Form auf, so dass, die Durchbrüche 28 ausgenommen, der Mantelabschnitt 30 eine kreiszylindrische Außenform aufweist. Dies bewirkt das Blockieren einer Verschiebung entlang des zweiten Langloch 52.

Durch eine Drehung um 90° um die Schraubachse 15 kann ein Verschieben entlang des zweiten Langlochs 52 ermöglicht werden. Durch eine solche Drehung wird der Käfig 16 mit seinem Mantelabschnitt 30 derart um die Schraubachse 15 gedreht, dass die Durchbrüche 28 des Mantelabschnitts 30 entlang den Längsseiten 54 angeordnet sind. Der kreiszylindrische Verlauf der Außenform des Mantelabschnitts 30 wird durch die Durchbrüche 28 unterbrochen. Aufgrund der Durchbrüche 28 im Mantelabschnitt 30, weist der Käfig 16 in dieser Orientierung eine geringere Ausdehnung, die dem minimalen Abstand der Längsseiten 54 entsprechen kann. Das in Figur 5 dargestellte Beispiel stellt einen Zustand dar in dem das Verbindungssystem 10 entlang des Langlochs 52 verschoben werden kann.

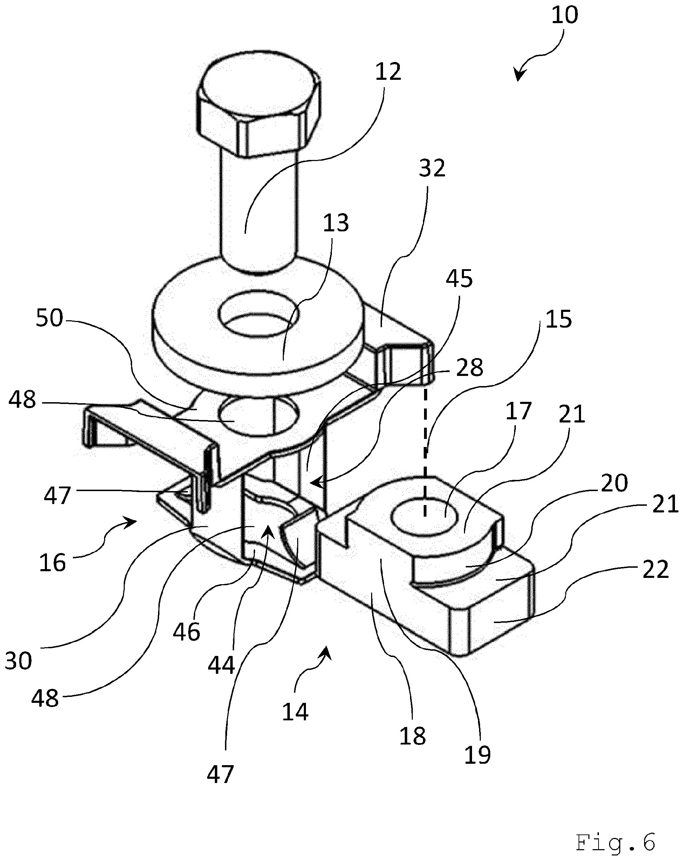

Figur 6 zeigt ein weiteres Ausführungsbeispiel des Verbindungssystems 10. Vorliegend ist der Bodenabschnitt 46 länglich ausgestaltet und weist zwei federnde Elemente 47 auf. Diese sind an gegenüberliegenden Seiten des Bodenabschnitt 46 (an den beiden Enden der Längsseite des Bodenabschnitt 46) angeordnet und ragen bezüglich der Schraubachse 15 nach radial innen und nach oben von dem Bodenabschnitt 46 weg, also in den Aufnahmeraum 44 hinein. Die federnden Elemente 47 stellen insbesondere federnd wirkende Vorsprünge des Bodenabschnitts 46 dar. Insbesondere sind die federnden Elemente 47 in der Art von Federlaschen oder Blattfedern ausgestaltet. Die beiden federnden Elemente 47 sind allgemein derart ausgebildet, dass sie die Mutter 14 in Richtung der Schraube 12 vorspannen, wenn sich das Verbindungssystem 10 im zusammengesetzten Zustand befindet, also wenn die Mutter 14 im Käfig 16 aufgenommen ist.

Mit anderen Worten, die federnden Elemente 47 drücken die Mutter 14 nach oben, in Richtung des Schraubenkopfes.

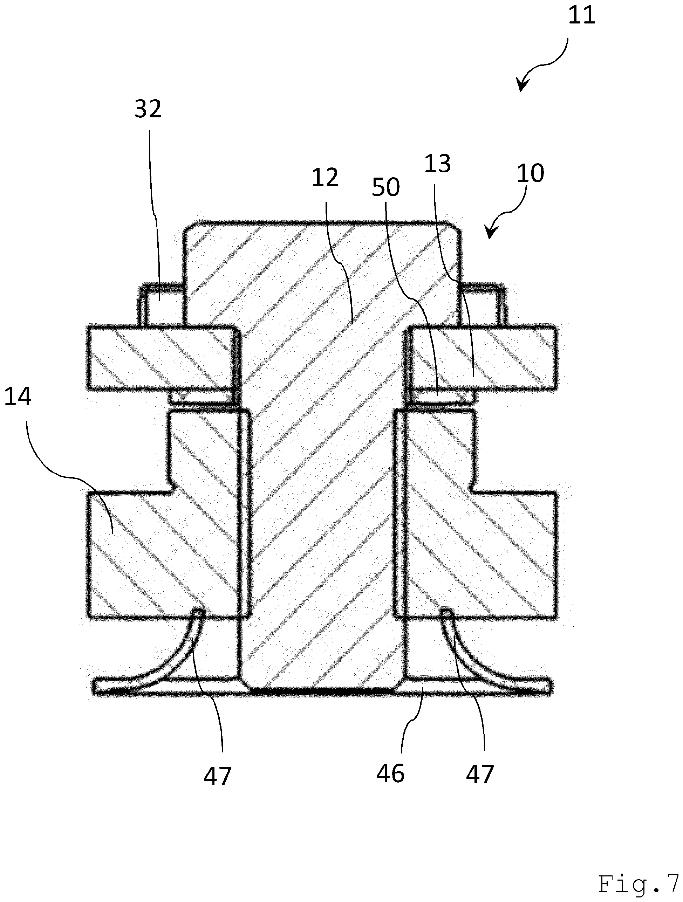

Figur 7 zeigt eine Ansicht auf einen Schnitt durch das Verbindungssystem 10 gemäß Figur 6. Vorliegend ist der zusammengesetzte Zustand des Verbindungssystem 10 dargestellt. Die federnden Elemente 47 drücken die Mutter 14 in Richtung des Schraubenkopfes (insbesondere auch von dem Bodenabschnitt 46 weg). Im dargestellten Beispiel wird die Mutter 14 mit der Oberseite 21 des Kopfabschnitts 20 an den Deckelabschnitt 50 angedrückt. Die beiden federnden Elemente 47 können einstückig mit dem Bodenabschnitt 46 ausgebildet sein. Mit anderen Worten, die federnden Elemente 47 können Teil des Bodenabschnitt 46 sein.

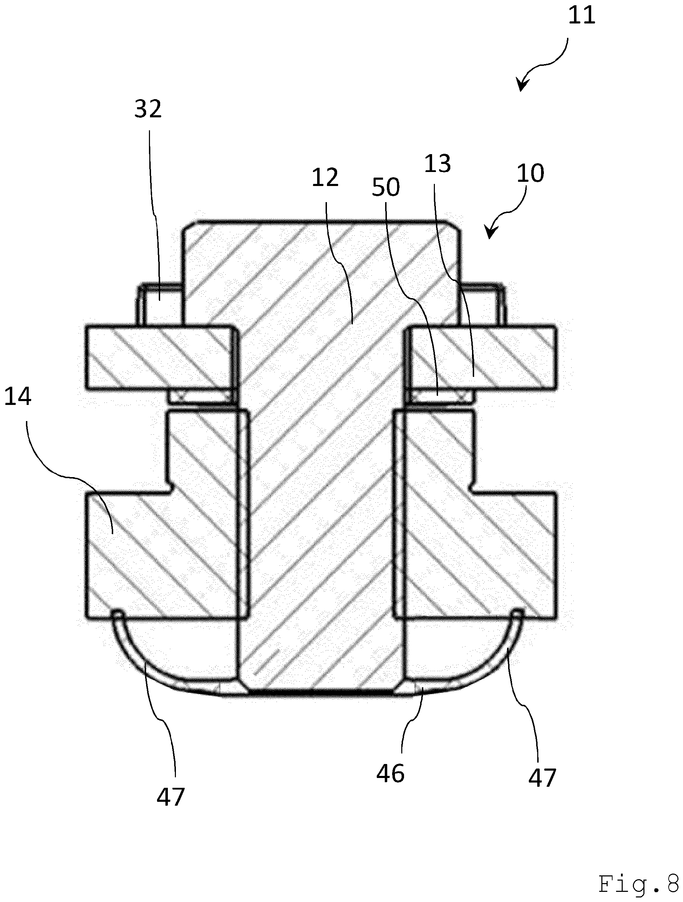

Figur 8 zeigt eine Ansicht auf einen Schnitt durch ein Verbindungssystems 10, bei dem die federnden Elemente 47 nicht zur Mittellängsachse (also in den Aufnahmeraum 44 hinein, nach radial innen) ragen, sondern nach radial außen (also von der Mittellängsachse bzw. vom Aufnahmeraum 44 weg).

## Patentansprüche

1. Verbindungssystem (10) zum Verbinden von mindestens zwei, insbesondere plattenartigen, Elementen, das Verbindungssystem (10) umfassend eine Schraube (12),
eine mit der Schraube (12) korrespondierende Mutter (14) mit einem sich entlang einer Schraubachse (15) erstreckenden Schraubkanal (17), in welchen die Schraube (12) einschraubbar ist,
und einen Käfig (16) zur Aufnahme der Mutter (14), wobei die Mutter (14) einen Fußabschnitt (22) und einen sich entlang der Schraubachse (15) anschließenden Kopfabschnitt (20) aufweist, wobei der Fußabschnitt(22) zumindest abschnittsweise in Richtung senkrecht zur Schraubachse (15) über den Kopfabschnitt (20) übersteht, und dass der Fußabschnitt (22) eine Oberseite (21) aufweist, wobei die Oberseite (21) dazu ausgebildet ist, zum Verbinden der Elemente an einer Oberfläche der Elemente anzuliegen,
wobei der Käfig (16) einen Bodenabschnitt (46) sowie einen an den Bodenabschnitt angrenzenden Mantelabschnitt (30) aufweist und einen Aufnahmeraum (44) für die Mutter (14) begrenzt, wobei der Mantelabschnitt (30) wenigstens einen Durchbruch (28) aufweist, durch welchen die Mutter (14) zumindest teilweise in den Aufnahmeraum (44) einschiebbar ist, wobei der Käfig (16) einen Deckelabschnitt (50) aufweist, wobei der Deckelabschnitt (50) an den Mantelabschnitt (30) angrenzt und beabstandet zum Bodenabschnitt (46) angeordnet ist,
wobei in dem Bodenabschnitt (46) und/oder dem Deckelabschnitt (50) eine Schrauböffnung (48) zum Durchführen der Schraube (12) vorgesehen ist,
**dadurch gekennzeichnet, dass**
der Käfig (16) und die Mutter (14) derart ausgebildet sind, dass die Mutter (14) in Richtung senkrecht zur Schraubachse (15) durch den Durchbruch (28) des Mantelabschnitts (30) in den Aufnahmeraum (44) derart einschiebbar ist, dass der Schraubkanal (17) mit der Schrauböffnung (48) des Bodenabschnitts (46) und/oder der Schrauböffnung (48) des Deckelabschnitts (50) fluchtet und, dass der Kopfabschnitt (20) der Mutter (14) geeignet ist,
durch die aneinander zu befestigenden Elemente durchgeführt zu werden.

2. Verbindungssystem (10) nach Anspruch 1, **dadurch gekennzeichnet, dass** der Fußabschnitt (22) und der Kopfabschnitt (20) der Mutter (14) stufenförmig ineinander übergehen.

3. Verbindungssystem nach Anspruch 1 oder 2, **dadurch gekennzeichnet, dass** der Schraubkanal (17) durch den Kopfabschnitt (20) und durch den Fußabschnitt (22) verläuft, insbesondere als Durchgangsöffnung durch Kopfabschnitt (20) und Fußabschnitt (22) ausgebildet ist.

4. Verbindungssystem (10) nach einem der voranstehenden Ansprüche, **dadurch gekennzeichnet, dass** die Oberseite (21) eben, insbesondere glatt, ausgebildet ist.

5. Verbindungssystem (10) nach einem der voranstehenden Ansprüche, **dadurch gekennzeichnet, dass** dann, wenn die Mutter (14) in den Aufnahmeraum (44) eingeschoben ist, der Kopfabschnitt (20) vollständig in dem Aufnahmeraum (44) aufgenommen ist und der Fußabschnitt (22) aus dem Aufnahmeraum (44) durch den Durchbruch (28) des Mantelabschnitts (30) hindurch zumindest teilweise hervorragt.

6. Verbindungssystem (10) nach einem der voranstehenden Ansprüche, **dadurch gekennzeichnet, dass** der Mantelabschnitt (30) des Käfigs (16) mindestens eine dem Aufnahmeraum (44) zugewandte Innenfläche (45) aufweist, wobei die Innenfläche (45) eine Anlagefläche für eine Seitenfläche (18) des Fußabschnitts (22) und/oder eine Seitenfläche (19) des Kopfabschnitts (20) derart bereitstellt, dass dann, wenn die Mutter (14) in den Aufnahmeraum (44) eingeschoben ist, die Mutter (14) gegen ein Verdrehen um die Schraubachse (15) fixiert ist.

7. Verbindungssystem (10) nach einem der voranstehenden Ansprüche, **dadurch gekennzeichnet, dass** der Käfig (16) eine zylindrische, insbesondere eine kreiszylindrische Außenform aufweist.

8. Verbindungssystem (10) nach einem der voranstehenden Ansprüche, **dadurch gekennzeichnet, dass** der Bodenabschnitt (46) und/oder der Deckelabschnitt (50) sich eben erstrecken und einen runden, insbesondere kreisförmigen, Außenumfang aufweisen.

9. Verbindungssystem (10) nach einem der voranstehenden Ansprüche, **dadurch gekennzeichnet, dass** in Projektion entlang der Schraubachse (15) betrachtet, der Bodenabschnitt (46) größer ist, als der Deckelabschnitt (50), insbesondere dass der Bodenabschnitt (46) den Deckelabschnitt (50) im Bereich des Durchbruchs (28) überragt.

10. Verbindungssystem (10) nach einem der voranstehenden Ansprüche, **dadurch gekennzeichnet, dass** an dem Käfig (16) mindestens zwei Vorsprünge (32) vorgesehen sind, die an dem Mantelabschnitt (30) des Käfigs (16) und/oder dem Deckelabschnitt (50) des Käfigs (16) angrenzen und sich insbesondere von der Schraubachse (15) weg erstrecken und insbesondere rotationssymmetrisch und/oder einander gegenüberliegend bezüglich der Schraubachse (15) angeordnet sind.

11. Verbindungssystem (10) nach einem der voranstehenden Ansprüche, **dadurch gekennzeichnet, dass** an dem Bodenabschnitt (46) mindestens ein federndes Element (47) derart angeordnet ist, dass das federnde Element (47) die Mutter (14), insbesondere den Fußabschnitt (22), im zusammengesetzten Zustand des Verbindungssystems (10) vom Bodenabschnitt (46) wegdrückt.

12. Anordnung (11) umfassend ein Verbindungssystem (10) nach einem der voranstehenden Ansprüche, ein erstes insbesondere plattenartiges Element (34) und ein zweites insbesondere plattenartiges Element (36), wobei das erste Element (34) und das zweite Element (36) mindestens ein Loch (38) aufweisen, wobei das Loch (38) eine der Mutter (14) und/oder dem Bodenabschnitt (46) des Käfigs (16) entsprechende Form aufweist, so dass der Käfig (16) mitsamt aufgenommener Mutter (14) in das Loch (38) einführbar ist.

13. Anordnung (11) nach Anspruch 12 **dadurch gekennzeichnet, dass** das erste Element (34) und/oder das zweite Element (36) ein erstes Langloch (40) mit zwei Längsseiten (42) aufweist und der Abstand zwischen den Längsseiten (42) dem Bodenabschnitt (46) des Käfigs (16) entspricht, so dass der Käfig (16) mit aufgenommener Mutter (14) in das Langloch (40) einführbar und das Verbindungssystem (10) entlang des Langlochs (40) bewegbar ist.

14. Anordnung (11) nach Anspruch 12 oder 13, **dadurch gekennzeichnet, dass** das erste Element (34) und/oder das zweite Element (36) ein zweites Langloch (52) mit zwei Längsseiten (54) aufweist, wobei das zweite Langloch (52) an mindestens einer Stelle (56) eine dem Bodenabschnitt (46) des Käfigs (16) entsprechende Form aufweist, wobei an dieser Stelle (56) der Abstand zwischen den beiden Längsseiten (54) größer ist, als an einer anderen Stelle des zweiten Langlochs (52), so dass das Bewegen des Verbindungssystems (10) entlang des Langlochs (52), insbesondere durch eine Drehung des Käfigs (16) um 90° um die Schraubachse (15), blockierbar ist.

15. Anordnung (11) nach einem der Ansprüche 12 bis 14, **dadurch gekennzeichnet, dass** das Verbindungssystem (10), das erste Element (34) und das zweite Element (36) derart positionierbar sind, dass die beiden Elemente (34, 36) zwischen dem Käfig (16) und der Mutter (14) einklemmbar sind.

## Claims

1. Connection system (10) for connecting at least two, in particular plate-like, elements, the connection system (10) comprising a screw (12), a nut (14) corresponding to the screw (12) and having a screw channel (17) which extends along a screw axis (15) and into which the screw (12) can be screwed,
and a cage (16) for receiving the nut (14), the nut (14) having a foot portion (22) and a head portion (20) which adjoins said foot portion along the screw axis (15), the foot portion (22) projecting, at least in portions, beyond the head portion (20) in a direction perpendicular to the screw axis (15), and the foot portion (22) having an upper surface (21), the upper surface (21) being designed to abut a surface of the elements in order to connect the elements,
the cage (16) having a base portion (46) and a casing portion (30) which adjoins the base portion and delimits a receiving space (44) for the nut (14), the casing portion (30) having at least one opening (28) through which the nut (14) can be pushed, at least in part, into the receiving space (44), the cage (16) having a cover portion (50), the cover portion (50) adjoining the casing portion (30) and being arranged at a distance from the base portion (46), a screw opening (48) for the screw (12) to pass through being provided in the base portion (46) and/or the cover portion (50),
**characterized in that**
the cage (16) and the nut (14) are designed such that the nut (14) can be pushed through the opening (28) in the casing portion (30) into the receiving space (44) in the direction perpendicular to the screw axis (15), such that the screw channel (17) is aligned with the screw opening (48) in the base portion (46) and/or the screw opening (48) in the cover portion (50) and such that the head portion (20) of the nut (14) is suitable to be passed
through the elements to be fastened together.

2. Connection system (10) according to claim 1, **characterized in that** the foot portion (22) and the head portion (20) of the nut (14) transition into one another in a stepped manner.

3. Connection system according to claim 1 or 2, **characterized in that** the screw channel (17) extends through the head portion (20) and through the foot portion (22), in particular is designed as a through-opening through the head portion (20) and the foot portion (22).

4. Connection system (10) according to any of the preceding claims, **characterized in that** the upper surface (21) is flat, in particular smooth.

5. Connection system (10) according to any of the preceding claims, **characterized in that** when the nut (14) is pushed into the receiving space (44), the head portion (20) is completely received in the receiving space (44) and the foot portion (22) protrudes, at least in part, from the receiving space (44) through the opening (28) in the casing portion (30).

6. Connection system (10) according to any of the preceding claims, **characterized in that** the casing portion (30) of the cage (16) has at least one inner surface (45) facing the receiving space (44), the inner surface (45) providing a contact surface for a side surface (18) of the foot portion (22) and/or a side surface (19) of the head portion (20) such that when the nut (14) is pushed into the receiving space (44), the nut (14) is secured against rotation about the screw axis (15).

7. Connection system (10) according to any of the preceding claims, **characterized in that** the cage (16) has a cylindrical, in particular a circular-cylindrical, outer shape.

8. Connection system (10) according to any of the preceding claims, **characterized in that** the base portion (46) and/or the cover portion (50) extend in a planar manner and have a round, in particular circular, outer circumference.

9. Connection system (10) according to any of the preceding claims, **characterized in that,** when viewed in projection along the screw axis (15), the base portion (46) is larger than the cover portion (50), in particular **in that** the base portion (46) protrudes beyond the cover portion (50) in the region of the opening (28).

10. Connection system (10) according to any of the preceding claims, **characterized in that** at least two projections (32) are provided on the cage (16), which adjoin the casing portion (30) of the cage (16) and/or the cover portion (50) of the cage (16) and in particular extend away from the screw axis (15) and in particular are rotationally symmetrical and/or opposite one another with respect to the screw axis (15).

11. Connection system (10) according to any of the preceding claims, **characterized in that** at least one resilient element (47) is arranged on the base portion (46) such that the resilient element (47) pushes the nut (14), in particular the foot portion (22), away from the base portion (46) in the assembled state of the connection system (10).

12. Arrangement (11) comprising a connection system (10) according to any of the preceding claims, a first, in particular plate-like, element (34) and a second, in particular plate-like, element (36), wherein the first element (34) and the second element (36) have at least one hole (38), wherein the hole (38) has a shape corresponding to the nut (14) and/or to the base portion (46) of the cage (16) such that the cage (16), together with the received nut (14), can be introduced into the hole (38).

13. Arrangement (11) according to claim 12, **characterized in that** the first element (34) and/or the second element (36) has a first elongate hole (40) having two longitudinal sides (42) and the distance between the longitudinal sides (42) corresponds to the base portion (46) of the cage (16) such that the cage (16), together with the received nut (14), can be introduced into the elongate hole (40) and the connection system (10) can be moved along the elongate hole (40).

14. Arrangement (11) according to claim 12 or 13, **characterized in that** the first element (34) and/or the second element (36) comprises a second elongate hole (52) having two longitudinal sides (54), the second elongate hole (52) having a shape corresponding to the base portion (46) of the cage (16) at at least one point (56), the distance between the two longitudinal sides (54) being greater at this point (56) than at another point of the second elongate hole (52) such that the movement of the connection system (10) along the elongate hole (52) can be blocked, in particular by rotating the cage (16) by 90° about the screw axis (15).

15. Arrangement (11) according to any of claims 12 to 14, **characterized in that** the connection system (10), the first element (34) and the second element (36) can be positioned such that the two elements (34, 36) can be clamped between the cage (16) and the nut (14).

## Revendications

1. Système de liaison (10) pour relier au moins deux éléments, en particulier du type plaque, le système de liaison (10) comprenant une vis (12), un écrou (14) correspondant à la vis (12) avec un canal de vissage (17) s'étendant le long d'un axe de vissage (15), dans lequel la vis (12) peut être vissée, et une cage (16) pour recevoir l'écrou (14), dans lequel l'écrou (14) présente une section de pied (22) et une section de tête (20) se raccordant le long de l'axe de vissage (15), dans lequel la section de pied (22) dépasse de la section de tête (20) au moins par sections dans la direction perpendiculaire à l'axe de vissage (15), et que la section de pied (22) présente une face supérieure (21), dans lequel la face supérieure (21) est réalisée pour s'appliquer contre une surface des éléments pour la liaison des éléments, dans lequel la cage (16) présente une section de fond (46) ainsi qu'une section d'enveloppe (30) adjacente à la section de fond et délimite un espace de réception (44) pour l'écrou (14), dans lequel la section d'enveloppe (30) présente au moins un passage (28) à travers lequel l'écrou (14) peut être inséré au moins partiellement dans l'espace de réception (44), dans lequel la cage (16) présente une section de couvercle (50), dans lequel la section de couvercle (50) est adjacente à la section d'enveloppe (30) et disposée à distance de la section de fond (46), dans lequel une ouverture de vissage (48) est prévue dans la section de fond (46) et/ou la section de couvercle (50) pour le passage de la vis (12), **caractérisé en ce que** la cage (16) et l'écrou (14) sont réalisés de telle sorte que l'écrou (14) peut être inséré dans l'espace de réception (44) dans la direction perpendiculaire à l'axe de vissage (15) à travers le passage (28) de la section d'enveloppe (30), de telle sorte que le canal de vissage (17) est aligné avec l'ouverture de vissage (48) de la section de fond (46) et/ou l'ouverture de vissage (48) de la section de couvercle (50) et que la section de tête (20) de l'écrou (14) est adaptée pour être traversée par les éléments à fixer les uns aux autres.

2. Système de liaison (10) selon la revendication 1, **caractérisé en ce que** la section de pied (22) et la section de tête (20) de l'écrou (14) se fondent l'une dans l'autre en formant des gradins.

3. Système de liaison selon la revendication 1 ou 2, **caractérisé en ce que** le canal de vissage (17) s'étend à travers la section de tête (20) et à travers la section de pied (22), en particulier est réalisé sous la forme d'une ouverture de passage à travers la section de tête (20) et la section de pied (22).

4. Système de liaison (10) selon l'une quelconque des revendications précédentes, **caractérisé en ce que** la face supérieure (21) est réalisée de manière plane, en particulier lisse.

5. Système de liaison (10) selon l'une quelconque des revendications précédentes, **caractérisé en ce que**, lorsque l'écrou (14) est inséré dans l'espace de réception (44), la section de tête (20) est entièrement reçue dans l'espace de réception (44) et la section de pied (22) fait au moins partiellement saillie de l'espace de réception (44) à travers le passage (28) de la section d'enveloppe (30).

6. Système de liaison (10) selon l'une quelconque des revendications précédentes, **caractérisé en ce que** la section d'enveloppe (30) de la cage (16) présente au moins une surface intérieure (45) tournée vers l'espace de réception (44), dans lequel la surface intérieure (45) fournit une surface d'appui pour une surface latérale (18) de la section de pied (22) et/ou une surface latérale (19) de la section de tête (20), de telle sorte que, lorsque l'écrou (14) est inséré dans l'espace de réception (44), l'écrou (14) est fixé de manière à ne pas pouvoir tourner autour de l'axe de vissage (15).

7. Système de liaison (10) selon l'une quelconque des revendications précédentes, **caractérisé en ce que** la cage (16) présente une forme extérieure cylindrique, en particulier une cylindrique circulaire.

8. Système de liaison (10) selon l'une quelconque des revendications précédentes, **caractérisé en ce que** la section de fond (46) et/ou la section de couvercle (50) s'étendent à plat et présentent une périphérie extérieure ronde, en particulier circulaire.

9. Système de liaison (10) selon l'une quelconque des revendications précédentes, **caractérisé en ce que**, vu en projection le long de l'axe de vissage (15), la section de fond (46) est plus grande que la section de couvercle (50), en particulier que la section de fond (46) fait saillie de la section de couvercle (50) dans la zone du passage (28).

10. Système de liaison (10) selon l'une quelconque des revendications précédentes, **caractérisé en ce que** au moins deux saillies (32), qui sont adjacentes à la section d'enveloppe (30) de la cage (16) et/ou à la section de couvercle (50) de la cage (16) et qui s'étendent en particulier en s'éloignant de l'axe de vissage (15) et sont en particulier disposées à symétrie de rotation et/ou en face l'une de l'autre par rapport à l'axe de vissage (15), sont prévues sur la cage (16).

11. Système de liaison (10) selon l'une quelconque des revendications précédentes, **caractérisé en ce qu'**au moins un élément élastique (47) est disposé sur la section de fond (46), de telle sorte que l'élément élastique (47) pousse l'écrou (14), en particulier la section de pied (22), à l'écart de la section de fond (46) dans l'état assemblé du système de liaison (10).

12. Ensemble (11) comprenant un système de liaison (10) selon l'une quelconque des revendications précédentes, un premier élément (34) en particulier du type plaque et un deuxième élément (36) en particulier du type plaque, dans lequel le premier élément (34) et le deuxième élément (36) présentent au moins un trou (38), dans lequel le trou (38) présente une forme correspondant à l'écrou (14) et/ou à la section de fond (46) de la cage (16), de sorte que la cage (16) peut être introduite dans le trou (38) avec l'écrou (14) reçu.

13. Ensemble (11) selon la revendication 12, **caractérisé en ce que** le premier élément (34) et/ou le deuxième élément (36) présente un premier trou oblong (40) avec deux côtés longitudinaux (42) et la distance entre les côtés longitudinaux (42) correspond à la section de fond (46) de la cage (16), de sorte que la cage (16) avec l'écrou (14) reçu peut être introduite dans le trou oblong (40) et le système de liaison (10) peut être déplacé le long du trou oblong (40).

14. Ensemble (11) selon la revendication 12 ou 13, **caractérisé en ce que** le premier élément (34) et/ou le deuxième élément (36) présente un deuxième trou oblong (52) avec deux côtés longitudinaux (54), dans lequel le deuxième trou oblong (52) présente, en au moins un endroit (56), une forme correspondant à la section de fond (46) de la cage (16), dans lequel la distance entre les deux côtés longitudinaux (54) est plus grande à cet endroit (56) qu'à un autre endroit du deuxième trou oblong (52), de sorte que le déplacement du système de liaison (10) le long du trou oblong (52), notamment par une rotation de la cage (16) de 90° autour de l'axe de vissage (15), peut être bloqué.

15. Ensemble (11) selon l'une quelconque des revendications 12 à 14, **caractérisé en ce que** le système de liaison (10), le premier élément (34) et le deuxième élément (36) sont positionnables de telle sorte que les deux éléments (34, 36) puissent être serrés entre la cage (16) et l'écrou (14).
